Europäisches Patentamt

European Patent Office

Office européen des brevets

(11) Publication number: **0 300 686**
A2

# EUROPEAN PATENT APPLICATION

(21) Application number: 88306451.1

(22) Date of filing: 14.07.88

(51) Int. Cl.⁴: **B60C 23/00**

(30) Priority: 23.07.87 GB 8717443

(43) Date of publication of application:
25.01.89 Bulletin 89/04

(84) Designated Contracting States:
AT BE CH DE ES FR GB GR IT LI LU NL SE

(71) Applicant: GROUP LOTUS PLC

Norwich Norfolk NR14 8EZ(GB)

(72) Inventor: Wright, Peter Godfrey
Downham Grove
Wymondham Norfolk NR17 0SN(GB)
Inventor: Williams, David Allen
Cranfield Institute of Technology
Cranfield§Bedford(GB)

(74) Representative: Jones, Ian et al
G. RATHBONE & CO. High Holborn House
52-54 High Holborn
London WC1V 6RY(GB)

(54) Monitoring vehicle tyre inflation.

(57) The state of inflation of inflatable tyres of a vehicle is monitored by providing a transducer output dependent on the load experienced by each wheel, by generating from the outputs a signal representing the instantaneous value of the warp load of the vehicle, and producing an output representing the rate of change of the average warp load. This output is compared with a reference signal representing a predetermined rate of change of average warp load, to energize indicating means when the output exceeds the reference signal. The indicating means can indicate a deflation condition to the driver of the vehicle and/or to the driver of a following vehicle. Vehicle speed can be limited in response to a detected deflation condition.

FIG.1.

## MONITORING VEHICLE TYRE INFLATION

The invention relates to a system for monitoring the degree of inflation of the tyres of a vehicle during vehicle operation.

Any loss of inflation of a vehicle tyre that occurs whilst the vehicle is being driven is a source of danger and it would accordingly be very desirable for safety reasons to be able to detect such a condition, so that the vehicle can be promptly brought to a halt or its operation adjusted until the tyre can be replaced.

The invention accordingly provides a vehicle tyre inflation monitoring system in which the vehicle wheel loads are continuously measured and changes consequential upon a loss of pressure are detected to provide a system output. The system of the invention can thus comprise means for measuring the load on each of the vehicle wheels, means for calculating the vehicle warp load from the measured loads, and means for detecting a rate of change in the average warp load above a predetermined rate of change as an indication of tyre deflation.

When a vehicle tyre loses pressure, its stiffness decreases so that it supports a reduced proportion of the total load of the vehicle. The warp load consequently changes at a rate in excess of the rate of change experienced in normal circumstances. The system of the present invention detects this excess rate of change.

The system can incorporate an alarm or indicator device to warn the driver of the detected loss of inflation, and/or other means to signal the condition externally of the vehicle to other drivers, and/or means for exerting a control function, for example, to limit the maximum speed at which the vehicle can be driven.

The monitoring system of the invention requires the load on each vehicle wheel to be continuously measured and these load measurements can be employed for other purposes for example in an active vehicle suspension system such as that described in EP 0 114 757, for example, to the disclosure of which reference may be made.

The invention is further described below, by way of illustration, with reference to the accompanying drawing, in which:

Figure 1 is a schematic plan view of a four-wheeled road vehicle incorporating a tyre inflation monitoring system in accordance with the invention; and

Figure 2 schematically illustrates in block diagram form an electronic control unit included in the monitoring system.

In the accompanying drawing, there is schematically illustrated a road vehicle 1, which may be for example a racing or a passenger vehicle, which incorporates a tyre inflation monitoring system in accordance with the present invention, but which need not in other respects differ from a conventional vehicle of its kind. The monitoring system comprises a transducer 2, for example, a load cell, for each of the road wheels 4, each transducer supplying an electrical output representing the instantaneous value of the loading of the associated wheel. The outputs of the transducers 2 are supplied to a control unit 10 on respective lines 5.

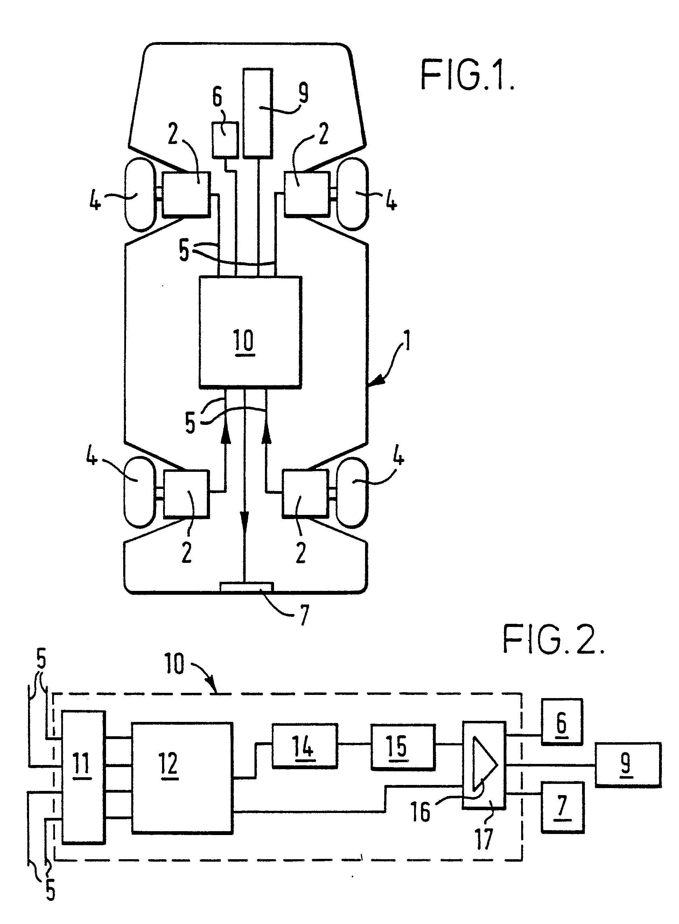

As schematically shown in Figure 2, the control unit 10 comprises a signal conditioning circuitry 11 which receives the analog signals generated by the transducers 2 and conditions them for treatment by processing equipment included in the unit 10. The processing equipment conveniently operates digitally and the circuitry 11 then comprises an analogue-to-digital converter. The conditioned load signals are supplied to a vehicle warp load computer 12 which derives from them a signal representing the instantaneous value of the vehicle warp load. The computer output signal is conveyed to an averaging unit 14 in which are developed successive signals representing average warp load over successive predetermined time periods which may run without interval or which may be spaced at an appropriate sampling rate. These signals are further processed in circuitry 15 to develop successive rate of change signals, each representing the rates of change of the average warp load during the predetermined periods. The rate of change signals are applied in turn to one input of a comparator 16 included in an output device 17, for comparison with a reference signal supplied to the second input of the comparator. The reference signal which can be obtained from a memory of the computer 12, represents a predetermined rate of change of the average warp load.

When the measured rate of change exceeds the reference rate of change, the output device supplies an actuating output signal to alarm or indicating equipment 6 which provides an audible and/or visible warning to alert the driver to the tyre deflation detected. Instead or as well, the output device 17 can supply a signal for actuating an externally visible emergency signalling device 7 on the vehicle, positioned for example to alert the driver of a following car. Additionally if desired, a speed control signal can be supplied to the vehicle engine 9 in order to limit the maximum speed at which the vehicle can be driven.

The invention can be embodied in a variety of ways other than as specifically described and illustrated.

Claims

1. A vehicle tyre inflation monitoring system comprising means (2) for measuring the loading of each of the vehicle wheels (4), and means (10) responsive to a predetermined change in the loading of a wheel due to tyre deflation to provide a system output signal, for a control and/or warning function.

2. A system as claimed in claim 1 wherein the means (10) responsive to the predetermined change in wheel loading comprise signal processing means (12) for calculating the vehicle warp load from the measured loads and means (14-16) providing the system output in response to detection of a rate of change in the average warp load above a predetermined rate of change.

3. A system as claimed in claim 2 wherein the signal processing means comprises means (14) for averaging the calculated vehicle warp load over a predetermined time, means (15) for calculating the rate of change of the averaged vehicle warp load, and means (16) for comparing the rate of change with a reference value representing the calculated rate of change.

4. A system as claimed in claim 1, 2 or 3 comprising indicating means (6) responsive to the system output signal to afford an audible and/or visual indication to the vehicle driver.

5. A system as claimed in claim 1, 2, 3 or 4 comprising indicating means (7) responsive to the system output signal to afford an audible and/or visual indication to the driver of a following vehicle.

6. A system as claimed in any preceding claim comprising means responsive to the system output signal to limit vehicle speed.

FIG.1.

FIG.2.